# EUROPEAN PATENT APPLICATION

(11) **EP 2 148 215 A1**
(43) Date of publication of application: **27.01.2010**
(21) Application number: 09164974.9
(22) Date of filing: 08.07.2009
(51) Int. Cl.: G01S 7/04, G01S 13/95

(54) **Systems and methods for re-triggering of radar weather display**

(30) Priority: 24.07.2008 US 179203
(71) Applicant: Honeywell International Inc., Morristown, NJ 07962 (US)
(72) Inventor: Bunch, Brian P., Morristown, NJ 07962-2245 (US)
(74) Representative: Buckley, Guy Julian

(57) **Abstract**

After deactivation of the presentation of weather information on a radar weather display (214), systems and methods re-trigger when weather conditions change so that the crew is advised of the changed weather conditions. An exemplary embodiment monitors at least one condition of the weather and in response to the monitored weather condition meeting a re-triggering criteria, presents an advisory to a crew member of the aircraft (104) indicating at least presence of the weather.

## Description

### BACKGROUND OF THE INVENTION

A variety of weather radar (WXR) systems are used on aircraft to advise aircraft crew members of potential weather hazards that may lie along or in close proximity to a planned flight path. The WXR system may be integrated with other systems to present a variety of information on a display. For example, the display in an aircraft cockpit may be configured to present a variety of information to the crew members, such as a graphical depiction of the planned flight path, terrain features of interest (airports, mountains, etc.), other aircraft, and various types of weather (storm cells, precipitation, turbulence, etc.). Typically, the presented information is displayed in relation to a respective distance from the aircraft.

Some display systems provide for user selection of the types of information that is presented, or not presented, by the display system. In particular, weather conditions about the aircraft are presented by the WXR system on a display using icons. The icons correspond to the radar detected weather, such as storm cells or regions of turbulence along or near the planned flight path.

At times, the crew members may not wish to view the weather-related information. For example, such weather-related information may over-clutter the display and/or be distracting to the crew members. Accordingly, the crew members may operate the display system to deselect display of the WXR weather information such that the icons corresponding to the detected weather are removed from presentation on the display.

However, it is appreciated that the aircraft may be moving at relatively high speeds with respect to nearby weather. Accordingly, the aircraft may move into proximity of weather which was not earlier presented on the display system. Additionally, or alternatively, new weather may be generated that was not earlier presented on the display. For example, a storm cell may build up over a relatively short period of time, or a temperature inversion may quickly generate regions of turbulence. If the display of the WXR weather information has been deselected by the crew of the aircraft such that the weather icons are not presented on the display, the crew may unexpectedly encounter the weather, or the crew may not appreciate the severity of the weather when encountered.

Accordingly, it is desirable to provide weather related alerts to the crew members of the aircraft. Such alerts may be audible, presented as alpha numeric textual alerts on the display, and/or may be presented as weather icons on the display. However, repeatedly providing re-alerts to the crew members for previously viewed and considered weather-related information may be particularly distracting, and may even be annoying. Accordingly, it is further desirable to differentiate between changes in weather and provide alerts to the crew members for new or changing weather conditions.

### SUMMARY OF THE INVENTION

After deactivation of the presentation of weather information on a radar weather display, systems and methods re-trigger when weather conditions change so that a flight crew is advised of the new weather conditions. An exemplary embodiment monitors at least one condition of the weather and in response to the monitored weather condition meeting a re-triggering criteria, presents an advisory indicating at least presence of the new weather.

One embodiment presents icons corresponding to the weather on the display. Alternatively, or additionally, a textual alert indicating presence of the weather is presented on the display. Further, an audible alert indicating presence of the weather may be communicated from a speaker.

### BRIEF DESCRIPTION OF THE DRAWINGS

Preferred and alternative embodiments are described in detail below with reference to the following drawings:

FIGURE 1 is a perspective view of a portion of a planned flight path of an aircraft through a region of space having a plurality of storm cells and turbulence regions;

FIGURE 2 is a block diagram of an embodiment of a weather radar (WXR) re-trigger advisory system;

FIGURE 3 is a plan view display presenting a view of the planned flight path through the region of space having a plurality of storm cell icons and turbulence region icons;

FIGURE 4 is a plan view display presenting a view of the planned flight path after the crew has deselected presentation of the weather information;

FIGURE 5 is a plan view display presenting a view of the planned flight path with presentation of an alpha-numeric text advisory corresponding to a change in the weather that meets a re-triggering criteria of the WXR re-trigger advisory system;

FIGURE 6 is a plan view display presenting a view of the planned flight path with presentation of a weather information pop-up corresponding to the change in the weather that meets a re-triggering criteria of the WXR re-trigger advisory system;

FIGURE 7 is a plan view display illustrating the location of event points used to track weather;

FIGURE 8 is a plan view display conceptually illustrating a change in the planned flight path; and

FIGURE 9 is a plan view display conceptually illustrating an advancement in the location of the aircraft after having travelled along the original planned flight path.

### DETAILED DESCRIPTION OF THE PREFERRED EMBODIMENT

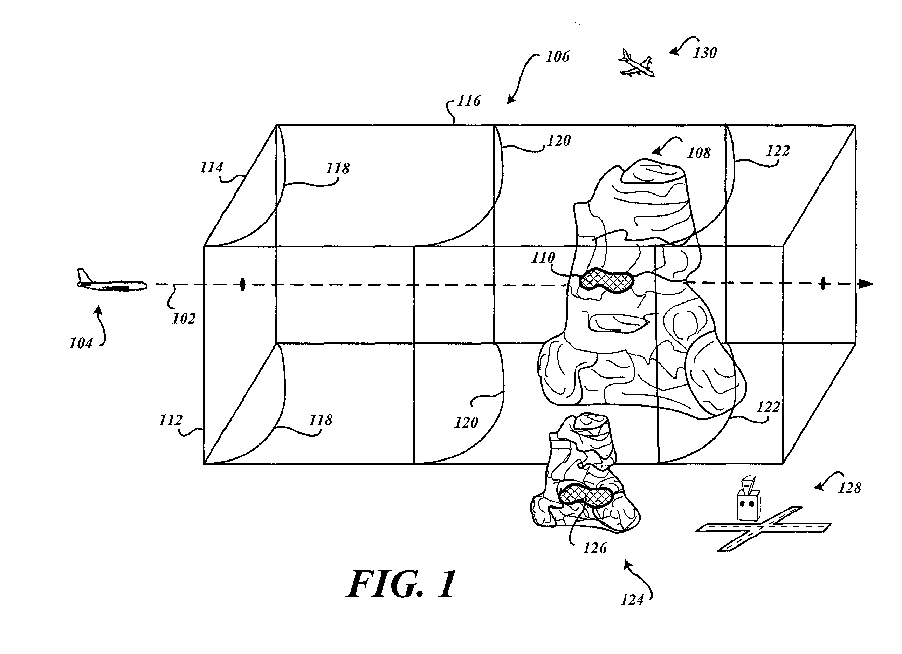

FIGURE 1 is a perspective view of a portion of a planned flight path 102 of an aircraft 104 through a region of space 106 with weather, such as a storm cell 108, therein. A turbulence region 110 resides in the storm cell 108. The turbulence region 110 is conceptually illustrated as cross-hatched regions for delineation from the storm cell 108. The term "weather" generally refers to any types of detectable weather phenomena, such as, but not limited to, storm cells, turbulence regions, clouds, precipitation, hail, snow, wind shear, and the like that the aircraft 104 may encounter. Weather conditions may include location of the weather, severity or the weather, size of the weather, movement of the weather, etc.

The planned flight path 102 is bounded by the region of space 106 that is defined by at least one predefined threshold, such as an altitude threshold 112, a lateral threshold 114, and/or a range threshold 116. The altitude threshold 112 is defined by a distance below the planned flight path 102 and a distance above the planned flight path 102. The lateral threshold 114 is defined by distance to either side of the planned flight path 102. The range threshold 116 is defined by a distance from the aircraft 104 along the planned flight path 102. The distances defining the altitude threshold 112, the lateral threshold 114, and the range threshold 116 may be the same or different. Further, the distances may be predefined or adjustable. For example, the range threshold 116 may be automatically adjustable to correspond to other information displayed to the flight crew members of the aircraft 104 and/or may be manually adjustable to a range of interest by the crew members of the aircraft 104.

Various distances 118, 120, 122 out from the aircraft 104 are also illustrated. These distances 118, 120, 122 may be displayed to the crew, and indicate the relative distance of the storm cell 108 and/or the turbulence region 110 from the aircraft 104. The displayed distances 118, 120, 122 may be adjustable by the crew of the aircraft 104.

A second storm cell 124 lies completely outside of the region of space 106. A second turbulence region 126 associated with the second storm cell 124 also lies outside the region of space 106. The lateral distance of the second turbulence region 126 from the planned flight path 102 is therefore greater than the right side value of the lateral threshold 114.

The planned flight path 102 extends over an airport 128. Also, another aircraft 130 is travelling to the outside of the planned flight path 102.

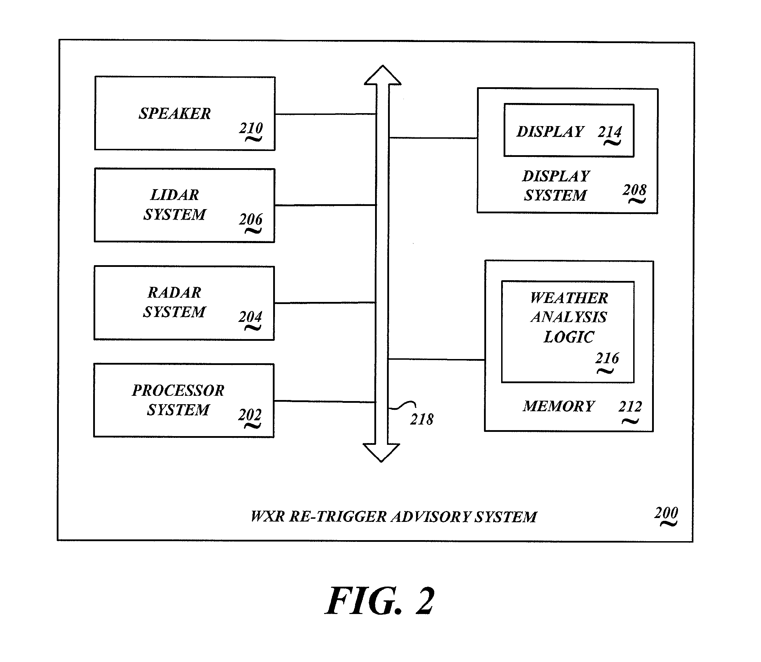

FIGURE 2 is a block diagram of an embodiment of a weather radar (WXR) re-trigger advisory system 200. The WXR re-trigger advisory system 200 comprises a processor system 202, a radar system 204, an optional light detection and ranging (LIDAR) system 206, a display system 208, an optional speaker 210, and a memory 212. Embodiments of the WXR re-trigger advisory system 200 may have additional components (not shown) that perform additional functions. Further, in alternative embodiments, various components of the WXR re-trigger advisory system 200 may reside in other locations and/or may be part of other systems. For example, the radar system 204 may be a separate stand-alone system that provides input to the WXR re-trigger advisory system 200. As another non-limiting example, the memory 212 may be a remote memory device that is configured to also store information and transmit information to other devices or systems. Alternatively, or additionally, the memory 212 may be a component of another system to which the WXR re-trigger advisory system 200 is communicatively coupled.

The weather analysis logic 216 resides in a portion of the memory 212. The processor system 202 retrieves and executes the weather analysis logic 216 to identify the presence of weather, track the location of the weather if the crew of the aircraft 104 deselects presentation of the weather information on display 214, and in response to certain situations pertaining to the conditions of the weather as described herein, generate a weather advisory. The weather advisory may be in the form of an audible alert communicated by speaker 210, an alpha numeric textual advisory presented on display 214, and/or a pop-up of the relevant weather icons (or a pop-up of all weather icons) presented on display 214.

The processor system 202, the radar system 204, the optional LIDAR system 206, the display system 208, the optional speaker 210, and the memory 212, are coupled to a communication bus 218, thereby providing connectivity to the above-described components. In alternative embodiments of the WXR re-trigger advisory system 200, the above-described components may be communicatively coupled to each other in a different manner. For example, one or more of the above-described components may be directly coupled to the processor system 202, or may be coupled to the processor system 202 via intermediary components (not shown).

The radar system 204 and the optional LIDAR system 206 are configured to emit electromagnetic energy in a known direction, typically in the direction of the planned flight path 102 that the aircraft 104 is travelling. When the emitted electromagnetic energy is reflected from weather phenomena, the radar system 204 and/or the optional LIDAR system 206 are configured to analyze the returning reflected electromagnetic energy. Analysis of the returning reflected electromagnetic energy allows identification of the type of weather phenomena, such as storm cells or regions of turbulences, and the relative location of the weather phenomena to the aircraft 104 (range, angle, and azimuth). The optional LIDAR system 206 can identify clear air turbulence regions.

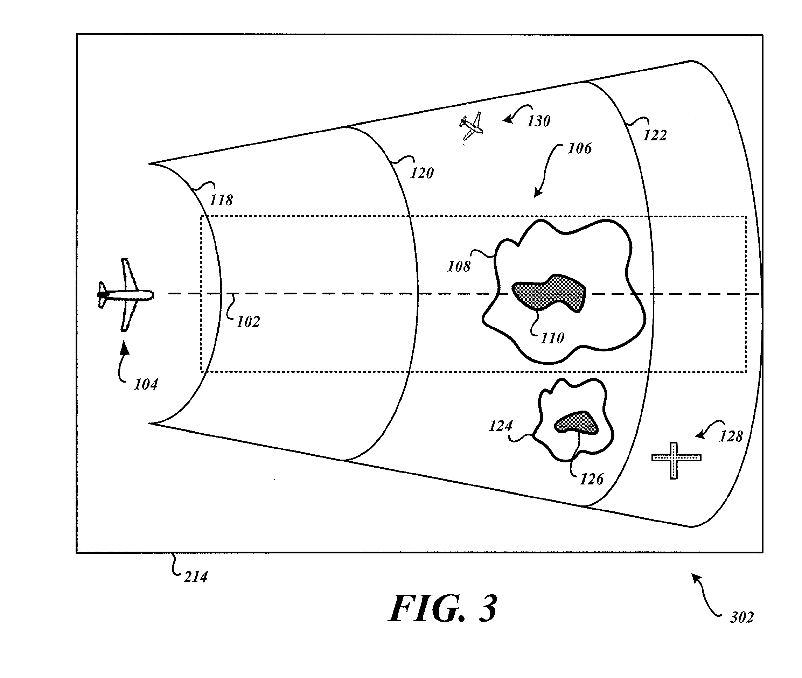

FIGURE 3 is a plan view display 302 presenting a view of the planned flight path 102 through the region of space 106 having a plurality of storm cell icons 108, 124 and turbulence region icons 110, 126. An icon 104 depicts the relative location of the aircraft 104 on the plan view display 302. An icon 106 depicts the relative location of the region of space 106 on the plan view display 302. An icon 128 depicts the relative location of the airport 128 on the plan view display 302. An icon 130 depicts the relative location of the other aircraft 130 on the plan view display 302.

For convenience, the reference numerals of the storm cell icons 108, 124 are the same as the reference numerals used to identify the storm cells 108, 124 of FIGURE 1. Similarly, the reference numerals of the turbulence region icons 110, 126 are the same as the reference numerals used to identify the turbulence regions 110, 126 of FIGURE 1. For example, the storm cell icon 108 corresponds to the storm cell 108 illustrated in FIGURE 1. Similarly, the reference numeral of the icon 106 corresponds to a plan view of the region of space 106, the icon 128 corresponds to the airport 128, and the icon 130 corresponds to the other aircraft 130.

Display system 208 presents (displays) the icon on its display screen 214. Location of a presented icon on the display screen 214 indicates the location of the identified turbulence region and/or storm cell relative to the aircraft 104. The size and/or shape of the presented icon indicates the relative size of the identified turbulence region and/or storm cell. The icon format (fill color, pattern, and/or intensity/brightness) may be used to indicate the severity of the identified turbulence region and/or storm cell. Further, the icon format may be used to differentiate between an identified turbulence region and an identified storm cell.

Embodiments of the WXR re-trigger advisory system 200 use different icon formats (fill patterns, color, and/or intensity/brightness) of the presented icons to differentiate between various conditions, such as severity and/or intensity, of the monitored weather. In an exemplary embodiment, a green fill color indicates a relatively less severe storm cell, such as a cloud. A yellow fill color indicates a relatively moderate severe storm cell. A red fill color indicates a relatively severe storm cell and may indicate to the crew that the storm cell area indicated with a red filled icon should be avoided if possible. A magenta fill color indicates a turbulence region. Thus, a crewmember may quickly scan the weather-related icons presented on display 214 and appreciate the type of weather, the location of the weather relative to the aircraft, the relative size of the weather, and/or the relative severity of the weather. If additional information regarding the displayed weather is required, supplemental alpha numeric information may be presented. Other embodiments may use other fill colors and/or patterns, and may differentiate other levels of severity as indicated by other predefined icon fill colors and patterns.

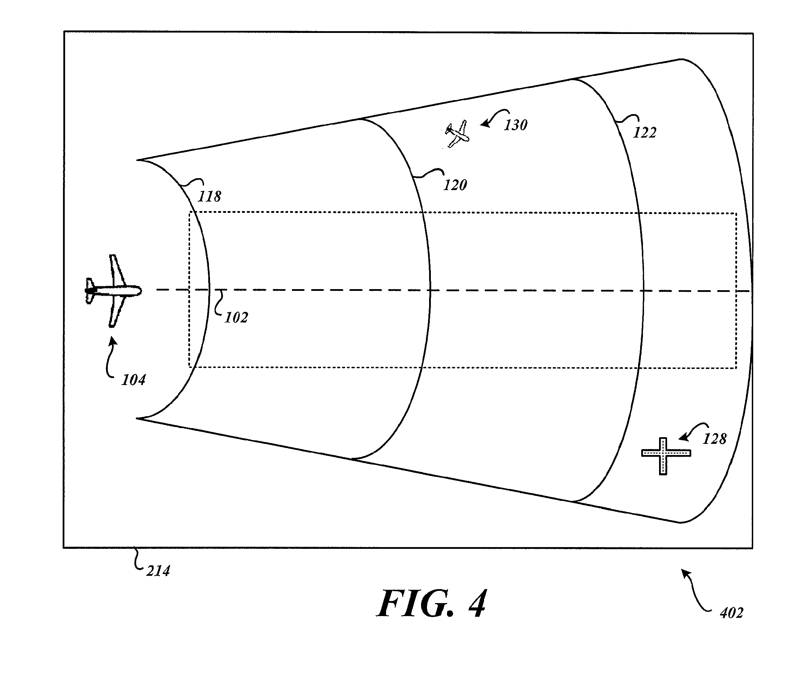

FIGURE 4 is a plan view display 402 presenting a view of the planned flight path 102 after the crew has deselected presentation of the weather information. As noted herein, the crew members may at times not wish to view the weather-related information. For example, such weather-related information may over-clutter the display and/or be distracting to the crew members. Accordingly, the crew members may operate the display system 208 to deselect presentation of the weather information such that the icons corresponding to the detected weather are removed from presentation on the display 214. When the deselection is made, presentation of the weather information on the display 214 ends. That is, the deselection disables presentation of icons corresponding to the detected weather on the display 214.

However, it is appreciated that the aircraft 104 may be moving at relatively high speeds with respect to the weather. Accordingly, the aircraft 104 may move into proximity of weather which was not earlier presented on the display 214. Additionally, or alternatively, new weather may be generated that was not earlier presented on the display 214. For example, a storm cell may build up over a relatively short period of time, or a temperature inversion may quickly generate regions of clear air turbulence. If the display of the weather information has been deselected by the crew of the aircraft 104 such that the weather icons are not presented on the display 214, the crew may unexpectedly encounter the weather, or the crew may not appreciate the severity of the weather when encountered. Accordingly, under various situations, embodiments of the WXR re-trigger advisory system 200 operate to provide alerts and/or warnings to the flight crew.

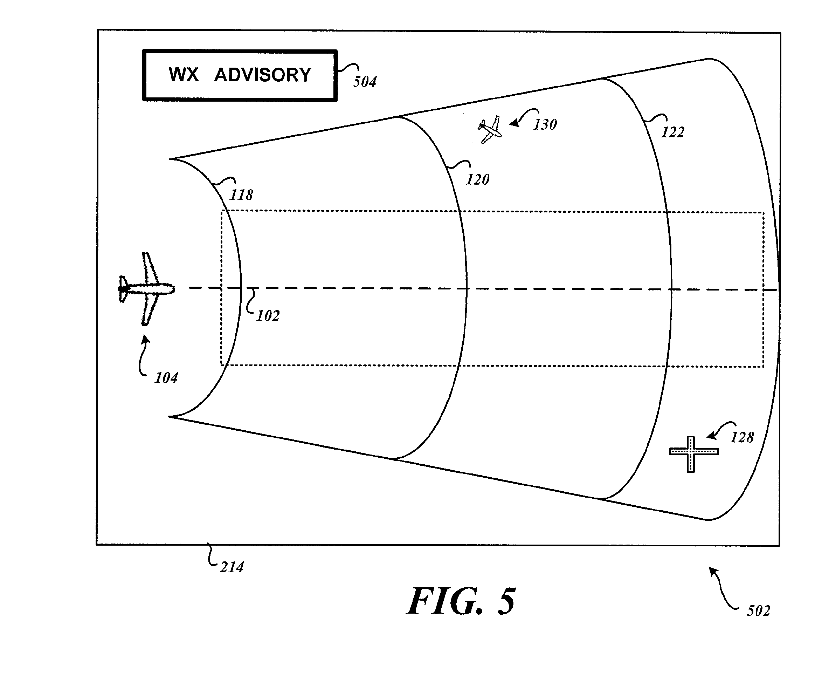

FIGURE 5 is a plan view display 502 presenting a view of the planned flight path 102 with presentation of an alpha-numeric text formatted weather advisory 504 corresponding to a change in the conditions of the weather that meets a re-triggering criteria of the WXR re-trigger advisory system 200. Any suitable text may be used to describe the nature of the weather. Additionally, or alternatively, an iconic symbol may be used as a weather advisory 504. The weather advisory 504 is automatically presented on the display 214 when the WXR re-trigger advisory system 200 determines the change in the weather that meets the re-triggering criteria. Upon viewing the weather advisory 504, the crew will realize that the display system 208 should be operated so as to present weather information on the display 214.

Additionally, or alternatively, an audible weather advisory may be communicated over the speaker 210. Any suitable signal, such as an alarm or a voice, may be used. The audible advisory is automatically communicated from the speaker 210 when the WXR re-trigger advisory system 200 determines a change in the weather that meets the re-triggering criteria. Upon hearing the audible alert, the crew will realize that the display system 208 should be operated so as to present weather information on the display 214.

As used herein, the term "re-trigger" refers to a changing of the operating status of the WXR re-trigger advisory system 200 from a mode where the icons associated with weather information are not displayed, to a mode where the icons corresponding to the weather are displayed on the display 214. Alternatively, or additionally, "re-triggering" may also refer to presentation of the weather advisory 504 and/or an audible advisory communicated over the speaker 210. That is, the presentation of weather information is "re-triggered" from a deselected state to a selected state when the WXR re-trigger advisory system 200 determines the change in the weather that meets the re-triggering criteria.

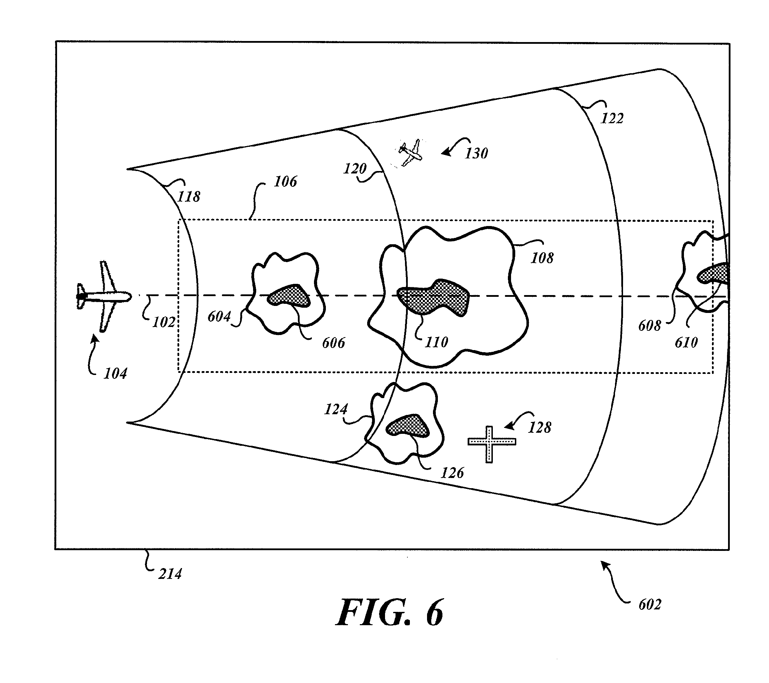

FIGURE 6 is a plan view display 602 presenting a view of the planned flight path 102 with presentation of a weather information pop-up corresponding to the change in the weather that meets a re-triggering criteria of the WXR re-trigger advisory system 200. The weather information pop-up corresponds to all of, or selected ones of, the presented icons that correspond to the weather.

A comparison of the relative location of the presented airport icon 128 on the display 214 between FIGURE 4 and FIGURE 6 indicates that the aircraft 104 has travelled some distance along its planned flight path 102. In view that icons corresponding to weather are now presented on the display 214, it is appreciated that one or more re-triggering criteria conditions have been satisfied such that the WXR re-trigger advisory system 200 has re-triggered presentation of the icons corresponding to the weather on the display 214.

In the exemplary embodiment conceptually illustrated in FIGURE 6, the WXR re-trigger advisory system 200 operates the display system 208 to present the icons corresponding to the weather on the display 214. In an exemplary embodiment, the WXR re-trigger advisory system 200 may be tied into the same controller that the crew uses to select/deselect display of the weather information on the display 214. Additionally, an audible advisory may be communicated over the speaker 210 to alert the crew that the presentation on the display 214 has been changed to include the weather information.

A first non-limiting example of a re-triggering criteria is the occurrence of new weather between the aircraft 104 and previously detected and considered weather. The previously detected weather in this example is the storm cell 108 and/or the turbulence region 110. In this simplified example, the crew of the aircraft 104 are presumed to have previously been aware of the storm cell 108 and/or the turbulence region 110, and have previously deselected presentation of the icons corresponding to the weather on the display 214. In this simplified example of a re-triggering criteria, a new storm cell 604 and/or a new turbulence region 606 has formed between the aircraft 104 and the previously indicated storm cell 108 and/or turbulence region 110. In another scenario, the new storm cell 604 and/or the new turbulence region 606 has moved to be in between the aircraft 104 and the previously indicated storm cell 108 and/or turbulence region 110.

Additionally, a severity or another relevant factor pertaining to the new storm cell 604 and/or the new turbulence region 606 has exceeded some predefined threshold for a monitored condition of the new weather. For example, if the new storm cell 604 is relatively mild in severity (otherwise displayed with a yellow fill icon), and thus below a weather severity threshold, the re-triggering criteria would not be satisfied (so that no re-triggering would occur to provide the weather advisory to the crew). On the other hand, if the new storm cell 604 is relatively severe (otherwise displayed with a red fill icon), and thus above the weather severity threshold, the re-triggering criteria would be satisfied (so that re-triggering would occur to provide the weather advisory to the crew). In the case of turbulence, severity may be based upon determined wind speed within a monitored turbulence region.

As another example, with respect to a storm cell, a reflectivity trigger threshold may used to determine if the weather advisory should be issued to the crew. The reflectivity trigger threshold is based upon a predefined reflectivity level for returning reflected radar signals received by the radar system 204 and/or the LIDAR system 206. Accordingly, output from the radar system 204 and/or the LIDAR system 206 could be monitored by the WXR re-trigger advisory system 200 to identify changes in the weather of interest for which re-triggering would occur to provide the weather advisory to the crew.

In some embodiments, the weather icons are not presented on the display 214 when a re-trigger occurs. Accordingly, the new storm cell 604 and the new turbulence region 606 initiates presentation of the weather advisory 504 illustrated in FIGURE 5. Thus, the crew is alerted to changing weather conditions, and realize that the mode of the display system 208 should be changed to display the icons corresponding to the monitored weather on the display 214.

In another embodiment, the severity or other characteristic of the new storm cell 604 and/or the new turbulence region 606 is evaluated against a plurality of thresholds. For example, but not limited to, if the severity or other characteristic exceeds a first trigger threshold, the weather advisory 504 illustrated in FIGURE 5, and/or a suitable audible advisory, is presented to the crew. If the severity or other characteristic exceeds a second trigger threshold, preferably higher than the first threshold, the display 214 is operated to present the icons corresponding to the weather as illustrated in FIGURE 6. Additionally, or alternatively, a suitable audible advisory may be presented to the crew to indicate that the severity or other characteristic exceeds the second trigger threshold.

Also illustrated in FIGURE 6 is a second new storm cell 608 and a second new turbulence region 610. The second new storm cell 608 and the second new turbulence region 610 are farther out from the aircraft 104 than the initial storm cell 108 and/or the initial turbulence region 110. In this example, the distance from the aircraft 104 to the second new storm cell 608 exceeds a range trigger threshold such that the WXR re-trigger advisory system 200 is not re-triggered based upon detection of the second new storm cell 608. That is, in this simplified example, the re-triggering criteria is not satisfied. Thus, if the crew had otherwise deselected display of the weather information on the display 214, the second new storm cell 608 and/or the second new turbulence region 610 (in the absence of the first new storm cell 604 and/or the first new turbulence region 606) would not cause a re-triggering to occur to provide the weather advisory to the crew when detected by the radar system 204 and/or the LIDAR system 206.

In some embodiments, new storm cells and/or new turbulence regions that are farther out in range from the aircraft 104 than previously presented storm cells and/or turbulence regions may be detected. If such farther-out detected new storm cells and/or new turbulence regions are within the range trigger threshold, they would satisfy the re-triggering criteria if the severity or other characteristic of the new storm cells and/or the new turbulence regions exceeds a predefined threshold. For example, but not limited to, if a new storm cell is relatively close to the aircraft 104 (i.e.; within the range trigger threshold), and greater than the weather severity threshold, the WXR re-trigger advisory system 200 would issue the weather advisory to notify the crew of the new weather. Thus, the display system 208 is then operated to display the icons corresponding to the new weather on the display 214 and/or an audible warning is provided to the crew. As noted above, two thresholds may be used to cause issuance of the weather advisory 504 illustrated in FIGURE 5 and/or the presentation of the icons corresponding to the weather on the display 214. Further, the predefined severity threshold for newly monitored weather may be different from the predefined severity threshold for previously detected weather.

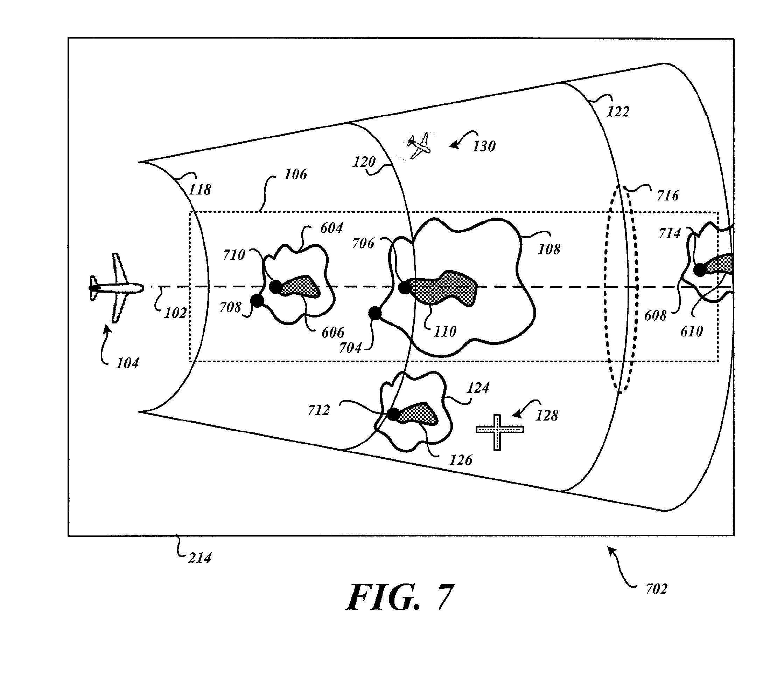

FIGURE 7 is a plan view display 702 conceptually illustrating the location of a plurality of event points used to track weather. Embodiments of the WXR re-trigger advisory system 200 are configured to continue monitoring the weather after the crew of the aircraft 104 have deselected presentation of the icons corresponding to the weather on the display 214. The location of the monitored weather is tracked by monitoring characteristics of an event point that is defined and associated with each or the regions of the weather. Event points are not presented on the display 214. (However, an alternative embodiment of the WXR re-trigger advisory system 200 may present the event points on the display 214.)

In one embodiment, the event point is a location point that is defined based on a selected portion of the weather. For example, the selected portion may be a leading edge of the weather. However, the event point may be associated with the location of any portion of interest of the weather. As another example, a central point of the weather of interest or a point of greatest severity may be used to define the location of the event point.

Changes in the location of the event point, either with respect to the aircraft 104 (relative location based on a range from the aircraft 104), and/or with respect to absolute changes in geographic location (absolute location based on latitude and longitude), are monitored. Changes in altitude of the event point may also be monitored. The changes in the relative location, the absolute location, and/or altitude of a defined event point that are greater than a predefined distance threshold may be used to re-trigger the WXR re-trigger advisory system 200.

Additionally, definition of a new event point for a new storm cell and/or a new turbulence region may be used to re-trigger the WXR re-trigger advisory system 200 if other re-triggering criteria are satisfied. Thus, determination of new event points, when associated with another criteria, may cause a re-trigger. Other criteria may include location within the region of space 106, a severity greater than a severity threshold, and/or a location within a predefined range threshold.

Several non-limiting examples are discussed with respect to FIGURE 7. An event point 704 is defined for and associated with the storm cell 108. Further, an event point 706 is defined for and associated with the turbulence region 110. Similarly, event point 708 is defined for and associated with the storm cell 604. An event point 710 is defined for and associated with the turbulence region 606. Event points 712 and 714 are defined for and associated with the turbulence regions 126 and 610, respectively.

In the simplified example of FIGURE 7, the leading edge of a storm cell or a turbulence region is used to define the location of the event point. However, any other suitable point or portion of the storm cell or the turbulence region may be used.

In some embodiments, the weather may not have an event point defined and/or associated with it. For example, the storm cell 124 may not be sufficiently severe enough to be of concern to the crew of the aircraft 104. That is, the severity of the storm cell 124 may be less than an event point severity threshold. Accordingly, no event point is defined for the storm cell 124 in this simplified example.

Alternatively, or additionally, the location of the storm cell 124 lies outside of the planned flight path 102. That is, the location of the storm cell 124 lies outside of the lateral threshold 114 (FIGURE 1). Accordingly, an event point is not defined for the storm cell 124 since it lies outside of the region of space 106 associated with the planned flight path 102. Similarly, an event point may not be defined for the storm cell 608 because it is not severe enough, and/or because it lies beyond a predefined range threshold, to be of concern to the crew of the aircraft 104.

As noted above, the relative location, the absolute location, and/or altitude of a defined event point may be used to re-trigger the WXR re-trigger advisory system 200. For example, the occurrence of the above-described new storm cell 604 and/or the new turbulence region 606 may be used to re-trigger the WXR re-trigger advisory system 200. Embodiments are configured to compare the location of the newly determined event points 708, 710 with the location of the event points 704, 706. Since the newly determined event points 708, 710 are located between the aircraft 104 and the event points 704, 706, the WXR re-trigger advisory system 200 is re-triggered. Further, the newly determined event points 708, 710 are within the region of space 106 for the planned flight path 102 as defined by the location threshold, such as at least one of the altitude threshold 112, the lateral threshold 114, and/or the range threshold 116.

As another non-limiting example, the location of the event point 712 associated with the turbulence region 126 lies outside of the planned flight path 102. Here, the event point 712 was determined since the severity of the turbulence region 126 exceeded the relevant severity threshold. Accordingly, in some embodiments, the WXR re-trigger advisory system 200 is not configured to re-trigger based upon the location of the event point 712 because the location of the event point 712 is outside of the lateral threshold 114.

As yet another non-limiting example, the location of the event point 714 associated with the turbulence region 610 lies beyond the predefined range threshold 116, as generally indicated by the region 716. The range threshold 116 corresponds to a predefined range (distance) out from the aircraft 104. Accordingly, in some embodiments, the WXR re-trigger advisory system 200 does not re-trigger based upon the location of the event point 714 because the location of the event point 714 is beyond the range threshold 116.

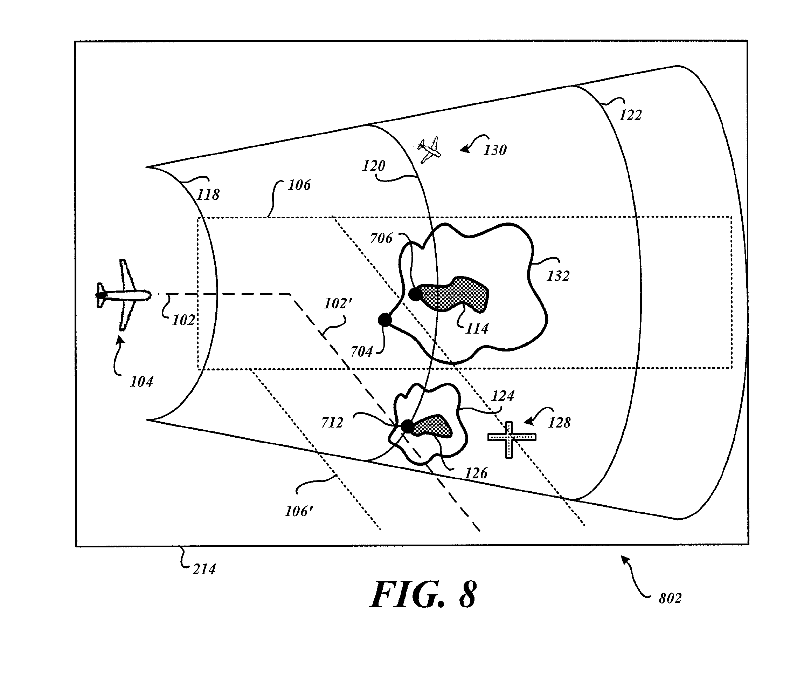

FIGURE 8 is a plan view display 802 conceptually illustrating a change in the planned flight path 102 to an adjusted planned flight path 102'. The adjusted planned flight path 102' defines an adjusted region of space 106'.

In this simplified example, the storm cell 124 and the turbulence region 126 now lie within an adjusted planned flight path 102'. The turbulence region 110 now lies outside of the adjusted region of space 106', while a portion of the storm cell 132 (and its associated event point 704) remains within the adjusted region of space 106'.

Embodiments of the WXR re-trigger advisory system 200 detect the adjusted planned flight path 102' and then analyze the weather with respect to the adjusted planned flight path 102'. Here, the WXR re-trigger advisory system 200 determines that the storm cell 124 and the turbulence region 126 now lies within an adjusted planned flight path 102', and is therefore within one or more of the the altitude threshold 112, the lateral threshold 114, and/or the range threshold 116. Assuming that characteristics of the storm cell 124 and the turbulence region 126 satisfy a re-triggering criteria, the WXR re-trigger advisory system 200 is configured to provide an advisory or warning to the crew of the aircraft 104. For example, the WXR re-trigger advisory system 200 may be configured to present icons corresponding to the weather on the display 214. Other embodiments may alternatively, or additionally, present the weather advisory 504 illustrated in FIGURE 5 and/or communicate an audible advisory from the speaker 210.

Since the location of the event point 706 now lies outside of the adjusted planned flight path 102', and is therefore outside one or more of the the altitude threshold 112, the lateral threshold 114, and/or the range threshold 116, the event point may be deactivated by the WXR re-trigger advisory system 200. Some embodiments may still track the event point 706, but not enable the re-trigger since the location of the event point 706 is now outside of the adjusted planned flight path 102'.

In contrast, the location of the event point 704 associated with the storm cell 132 remains within the adjusted planned flight path 102'. Accordingly, embodiments may continue to track the event point 704.

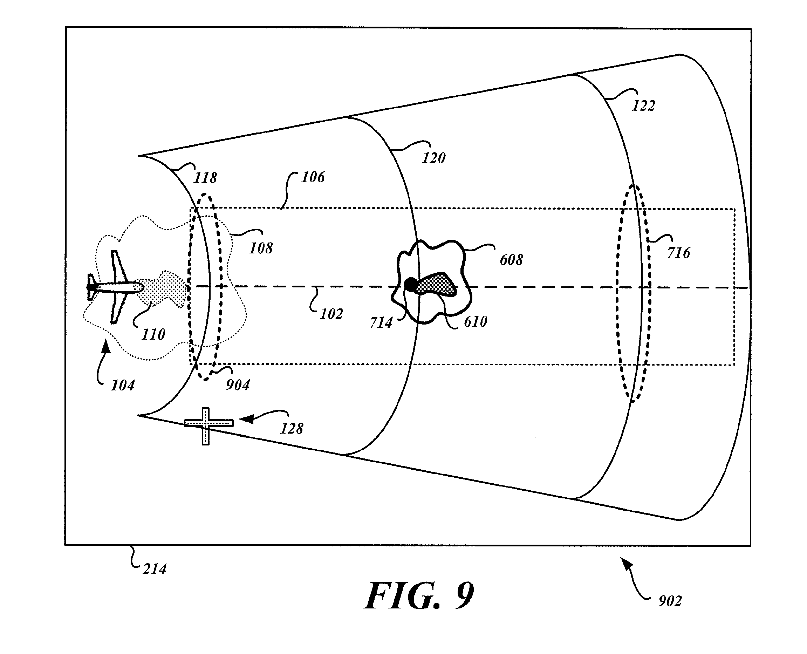

FIGURE 9 is a plan view display 902 conceptually illustrating an advancement in the location of the aircraft 104 after having travelled along the original planned flight path 102. Here, the aircraft 104 has entered the previously considered storm cell 108 and the turbulence region 110. Since the event points 704, 706 defined for and associated with the storm cell 108 and the turbulence region 110 have passed a second range threshold, as generally indicated by the region 904, the event points 704, 706 have been deactivated by the WXR re-trigger advisory system 200 in response to the location of the event points 704, 706 coming into proximity of the aircraft 104 within a predefined range threshold so that they do not enable the re-trigger of the WXR re-trigger advisory system 200. The storm cell 108 and the turbulence region 110 are shown with thin lines to conceptually illustrate their new relative location to the aircraft 104 and to conceptually illustrate that they are not presented on the display 214.

However, embodiments of the WXR re-trigger advisory system 200 have re-triggered based upon the event node 714 that has been defined for and associated with the turbulence region 610. Accordingly, the icons corresponding to the storm cell 608 and the turbulence region 610 are presented. In one embodiment, after the event point 704 has been deactivated by the WXR re-trigger advisory system 200, the event point 714 becomes the current event point. If the WXR re-trigger advisory system 200 has not yet re-triggered, then the WXR re-trigger advisory system 200 presents icons corresponding to the storm cell 608 and the turbulence region 610 on the display 214. Other embodiments may alternatively, or additionally, present the weather advisory 504 illustrated in FIGURE 5 and/or communicate an audible advisory from the speaker 210.

However, in some embodiments, if the storm cell 608 and the turbulence region 610 have already been considered by the crew of the aircraft 104, then the WXR re-trigger advisory system 200 would not re-trigger for the above-described scenario where the location of the event node 714 becomes the current event node. That is, the WXR re-trigger advisory system 200 would not present the icons corresponding to the storm cell 608 and the turbulence region 610 on the display 214, would not present the alpha-numeric text advisory 504 illustrated in FIGURE 5, and/or would not communicate an audible advisory from the speaker 210.

In some embodiments, icons for weather that do not have an event point defined from them are not presented on the display 214 when the WXR re-trigger advisory system 200 re-triggers based upon other weather. For example, in FIGURE 9, the icon associated with the storm cell 608 would be omitted from presentation on the display 214. Accordingly, the WXR re-trigger advisory system 200 is configured to select and display icons only for the weather that has a defined event point. Alternatively, or additionally, the WXR re-trigger advisory system 200 may be further configured to select and display icons only for the weather that have a severity that exceeds a severity threshold and/or has a location that is within a location threshold, such as at least one of the altitude threshold 112, the lateral threshold 114, and/or the range threshold 116. That is, only relevant weather is indicated to the crew of the aircraft 104.

After presentation of the icons (or the advisories) for the turbulence region 610 as illustrated in FIGURE 9, the crew of the aircraft may elect to end presentation of the icons corresponding to the storm cell 608 and the turbulence region 610. Then, embodiments of the WXR re-trigger advisory system 200 will track the current event point as before and enable a re-trigger as new relevant weather is detected.

In some embodiments, time delays are used between re-triggering events. As noted herein, when a change in a condition of a storm cell and/or a turbulence region from below a predefined threshold to above the threshold occurs, the WXR re-trigger advisory system 200 may re-trigger and an advisory would be presented on the display 214 and/or an audible warning would be communicated from the speaker 210. A time delay may be used to prohibit a re-trigger if the re-trigger event would otherwise occur shortly after the crew ends presentation of weather information on the display 214. Similarly, a delay distance corresponding to a distance travelled by the aircraft 104 may be used to delay a re-trigger.

The above simplified example presented the event points as corresponding to a point along the edge of the weather or a point within the weather. In some embodiments, the event point may be defined based upon a region of the weather. The event point may be an area, such as as a polygon, oval, circle or other region, corresponding to a relevant area of the weather. In some embodiments, the event point may be defined based upon a volume. In such embodiments, a change in a characteristic of the event point that is greater than an area threshold and/or a volume threshold may cause the re-trigger of the WXR re-trigger advisory system 200. For example, if a previously detected and considered storm cell rapidly grows in size, and if the size (area and/or volume) of the storm cell is correlated with an area event point and/or a volume event point, then the WXR re-trigger advisory system 200 would re-trigger and advise the crew of the aircraft 104 that the change in the weather conditions should be considered. Thus, the weather advisory would be presented on the display 214 and/or an audible warning would be communicated from the speaker 210.

In some embodiments, a weather condition may be associated with the event point. For example, the severity and/or speed of the weather may be associated with the event point. Accordingly, a change in the associated characteristic of the event point may be used as a re-triggering criteria. The characteristic may be compared with a threshold, or the characteristic may be monitored for a change greater than a threshold.

The display range of the display 214 may be adjustable by the crew of the aircraft 104. For example, the distances 118, 120, 122 out from the aircraft 104 may be adjustable by the crew of the aircraft 104. In one embodiment, distances corresponding to ranges of 20, 40, 60, and 80 nautical miles may be presented on the display 214. The distances may be adjustable to 40, 80, 120, and 160 miles or may be adjustable to 80, 160, 240, and 320 nautical miles. If a re-trigger criteria is satisfied as described herein, the display range of the display 214 may be automatically adjusted to an appropriate scale so that the icons for the weather are presented on the display 214 in a more meaningful manner.

For example, if the current display range is set on the 320 nautical mile scale, and the weather that re-triggers the WXR re-trigger advisory system 200 is only 10 nautical miles for the aircraft, the presented icon corresponding to the weather may not be noticeable to the crew. Accordingly, the display range scale may be changed to 80 nautical miles so that the crew may better appreciate the nature of the weather that caused the re-triggering of the WXR re-trigger advisory system 200.

As another example, the weather that caused the re-triggering of the WXR re-trigger advisory system 200 may be 120 nautical miles out from the aircraft 104. If the display 214 is set at the 80 nautical mile display range scale, an icon corresponding to the weather would not be presented on the display 214. Accordingly, embodiments of the WXR re-trigger advisory system 200 change the display range scale of the display 214 to a greater scale, such as the 160 nautical mile scale.

As used herein, the term "present" or the like may be interchangeably referred to as the term "display" or the like. For example, an icon may be "displayed" (presented) on the display 214.

The embodiments of the invention in which an exclusive property or privilege is claimed are defined as follows:

## Claims

1. A method for re-triggering a display on an aircraft (104) after presentation of weather information on the display (214) has been deselected, the method comprising:
monitoring at least one changing condition of the weather; and
in response to the monitored weather condition meeting a re-triggering criteria, presenting a weather advisory indicating the changed weather condition.

2. The method of Claim 1, wherein presenting the weather advisory comprises at least one of:
presenting at least an icon corresponding to the changed weather condition on the display;
presenting a textual message indicating the changed weather condition on the display; and
communicating an audible warning indicating the changed weather condition on a speaker.

3. The method of Claim 1, wherein the re-triggering criteria is a weather severity threshold and further comprising:
presenting the weather advisory in response to a severity of the changed weather condition exceeding the weather severity threshold.

4. The method of Claim 1, further comprising:
defining an event point for the monitored weather, the event point defined by an event point location associated with at least a location of a selected portion of the monitored weather.

5. The method of Claim 4, wherein the event point is a first event point defined by a first event point location, and further comprising:
detecting additional weather;
defining a second event point for the additional weather, the second event point defined by a second event point location associated with at least a location of a selected portion of the additional weather;
comparing the second event point location with the first event point location; and
presenting the weather advisory in response to the second event point location being closer to the aircraft (104) than the first event point location.

6. The method of Claim 5, wherein the weather advisory is presented only when the second event point location is within a region of space corresponding to a flight path of the aircraft.

7. The method of Claim 4, further comprising:
monitoring the event point location; and
deactivating the event point in response to the event point location coming into proximity of the aircraft (104) within a range threshold.

8. The method of Claim 1, wherein the event point is a first event point defined by a first event point location, and further comprising:
detecting additional weather within a region of space corresponding to a flight path of the aircraft (104);
defining a second event point for the additional weather, the second event point defined by a second event point location associated with at least a location of a selected portion of the additional weather; and
presenting the weather advisory in response to defining the second event point.

9. The method of Claim 1, wherein the event point is a first event point defined by a first event point location, and further comprising:
detecting additional weather within a region of space corresponding to a flight path of the aircraft;
defining a second event point for the additional weather, the second event point defined by a second event point location associated with at least a location of a selected portion of the additional weather;
comparing the second event point location with a range threshold; and
presenting the weather advisory in response to defining the second event point location coming within the range threshold as the aircraft (104) travels along the flight path.

10. The method of Claim 1, further comprising:
detecting a change in a flight path of the aircraft (104) to an adjusted flight path;
detecting additional weather within an adjusted region of space corresponding to the adjusted flight path; and
presenting the weather advisory in response to detecting the additional weather.
